# EUROPÄISCHE PATENTSCHRIFT

(11) **EP 2 219 551 B1**
(45) Veröffentlichungstag und Bekanntmachung des Hinweises auf die Patenterteilung: **14.08.2013**
(21) Anmeldenummer: 08854322.8
(22) Anmeldetag: 17.11.2008
(51) Int. Cl.: A61C 17/02, A61M 3/02, B05B 9/04, B65D 83/14, A61C 3/025, B05B 7/24, B65D 83/16

(54) **VORRICHTUNG ZUM APPLIZIEREN EINES PULVERFÖRMIGEN ODER FLÜSSIGEN STOFFES**
APPARATUS FOR APPLYING A POWDERY OR LIQUID MATERIAL
DISPOSITIF D'APPLICATION D'UNE SUBSTANCE PULVÉRULENTE OU LIQUIDE

(30) Priorität: 26.11.2007 DE 102007056870; 03.04.2008 DE 202008004615 U
(43) Veröffentlichungstag der Anmeldung: 25.08.2010
(73) Patentinhaber: Dispensys AG, 9100 Herisau (CH)
(72) Erfinder: SÓGARO, Alberto, C., 61476 Kronberg (DE)
(74) Vertreter: advotec.
(86) Internationale Anmeldenummer: PCT/DE2008/001898
(87) Internationale Veröffentlichungsnummer: WO 2009/067986

(56) Entgegenhaltungen:
- EP-A- 1 346 700
- DE-U1- 9 014 519
- DE-U1- 20 314 987
- GB-A- 845 449
- JP-A- 2000 051 234
- US-A- 2 814 877
- US-A- 5 501 596
- US-A- 5 941 702

## Beschreibung

Die Erfindung betrifft eine Vorrichtung zum Applizieren eines pulverförmigen oder flüssigen Stoffes mit den Merkmalen des Oberbegriffs des Anspruchs 1.

Eine derartige Vorrichtung ist aus der Praxis bekannt und stellt beispielsweise eine Sprühdose dar, die im Bereich ihres Sprühkopfes mit einem eine Appliziereinrichtung darstellenden Ausgaberöhrchen versehen ist. Die Sprühdose ist selbst mit einem Treib- bzw. Druckmittel versehen, wobei im Bereich des Sprühkopfes ein Anschluss für das Ausgaberöhrchen vorgesehen ist. An dem dem Sprühkopf abgewandten Ende hat das Ausgaberöhrchen eine Austragöffnung für den zu applizierenden pulverförmigen oder flüssigen Stoff.

Der Erfindung liegt die Aufgabe zugrunde, eine hohen hygienischen Anforderungen und variabel einsetzbare Vorrichtung der einleitend genannten Gattung zu schaffen.

Diese Aufgabe ist erfindungsgemäß durch die Vorrichtung mit den Merkmalen des Anspruchs 1 gelöst.

Die Vorrichtung nach der Erfindung umfasst mithin eine Druckausgabevorrichtung mit einem Druckmittelausgabeanschluss und eine im Wesentlichen röhrchenartige Appliziereinrichtung mit einem stromaufseitigen Bereich zur Verbindung mit dem Druckmittelausgabeanschluss und einer stromabseitigen Austragöffnung für den pulverförmigen oder flüssigen Stoff. Die Appliziereinrichtung ist mit mindestens einem Vorratsraum für den pulverförmigen oder flüssigen Stoff und mit mindestens einem Ventil versehen, nach dessen Öffnen eine Ausgabe des pulverförmigen oder flüssigen Stoffes mittels des Druckmittels über die Austragöffuung ermöglicht ist.

Bei der Vorrichtung nach der Erfindung wird mithin der zu applizierende Stoff unmittelbar in der Appliziereinrichtung vorgehalten. Die Druckausgabeeinrichtung wird dazu genutzt, nach Öffnen des Ventils den in der Appliziereinrichtung vorgehaltenen Stoff auf eine zu applizierende Fläche aufzutragen. Insbesondere kann die Appliziereinrichtung als Einwegeinrichtung zur Anwendung im Medizin- bzw. Dentalbereich ausgelegt sein, so dass stets hohen hygienischen Anforderungen genügt werden kann, wobei stets die gleiche Druckquelle in Form der Druckausgabeeinrichtung verwendet werden kann.

Die Druckausgabeeinrichtung ist beispielsweise eine mit Druckluft gefüllte Sprühdose oder auch eine sonstige, beispielsweise in einer Zahnarztpraxis ohnehin zur Verfügung stehende Druckquelle.

Der in der Appliziereinrichtung vorgehaltene pulverförmige oder flüssige Stoff ist beispielsweise ein Mattierungsmittel, das auf einen Zahnstumpf aufgebracht werden kann, welcher mittels einer Kamera zur Anfertigung eines Keramikinlays oder dergleichen aufgenommen werden soll. Es kann sich aber auch um ein sprühbares Lokalanästhetikum oder dergleichen handeln.

Durch das Ventil der Appliziereinrichtung nach der Erfindung kann sichergestellt werden, dass der vorgehaltene pulverförmige oder flüssige Stoff nicht in ungewollter Weise beispielsweise bei einer versehentlichen Betätigung der Druckausgabeeinrichtung über die Austragöffnung ausgetragen wird.

Bei der Ausführungsform der Vorrichtung nach der Erfindung umfasst das Ventil eine Innenhülse, die eine verschlossene Stirnseite aufweist, deren der verschlossenen Stirnseite abgewandtes Ende einen Bereich der Appliziereinrichtung bildet, der mit dem Druckmittelausgabeanschluss verbindbar ist und an der Umfangswand mindestens eine Queröffnung hat, wobei die Innenhülse an mindestens einer Dichtlippe einer von einem Zentralröhrchen gebildeten Außenhülse verschiebbar geführt ist, so dass in Abhängigkeit von der Stellung der Queröffnung gegenüber der Dichtlippe das Ventil entweder geöffnet oder geschlossen ist.

Denkbar ist es natürlich auch, dass der mit dem Druckmittelausgabeanschluss verbindbare Bereich der Appliziereinrichtung von einer Außenhülse gebildet ist, welche an ihrer Innenseite mit einer ringförmigen Dichtlippe versehen ist, an der das dann die Innenhülse bildende Zentralröhrchen verschiebbar geführt ist. In diesem Falle weist das Zentralröhrchen mindestens eine Queröffnung auf, von deren Öffnung gegenüber der an der Außenhülse ausgebildeten Dichtlippe der Öffnungszustand des Ventils abhängig ist.

Bei einer speziellen Ausführungsform der Vorrichtung nach der Erfindung ist der Vorratsraum stromauf des Ventils angeordnet und vorzugsweise von der Innenhülse gebildet. Um in diesem Fall den pulverförmigen oder flüssigen Stoff verliersicher in der Appliziereinrichtung zu halten, kann die betreffende Hülse, das heißt insbesondere die Innenhülse an dem dem Zentralröhrchen abgewandten Ende mittels einer Folie verschlossen sein, welche beim Aufsetzen der Appliziereinrichtung auf den Druckmittelausgabeanschluss von letzterem durchstoßen wird.

Bei einer alternativen Ausführungsform der Vorrichtung nach der Erfindung ist der Vorratsraum für den zu applizierenden Stoff stromab des Ventils angeordnet. Dies bedeutet, dass der Vorratsraum im Bereich des Zentralröhrchens angeordnet ist. Beispielsweise ist der Vorratsraum dann von einem radial bezüglich der Achse der Appliziereinrichtung angeformten Behälter gebildet. Denkbar ist es aber auch, dass der Vorratsraum von einem Bereich vergrößerten Durchmessers eines Zentralröhrchens der Appliziereinrichtung gebildet ist.

Insbesondere wenn in der Appliziereinrichtung ein flüssiger Stoff vorgehalten wird und der Vorratsraum im Bereich des Zentralröhrchens angeordnet ist, ist es zweckmäßig, dass das Zentralröhrchen mittels eines zweiten Ventils von einer Applizierspitze getrennt ist, welche die Austragsöffnung aufweist. Der zu applizierende Stoff kann dann erst nach Öffnen beider Ventile über die Austragöffnung auf eine zu applizierende Fläche aufgetragen werden.

Vorzugsweise weist auch das zweite Ventil eine Innenhülse auf, die stirnseitig geschlossen ist, an ihrer Umfangswand mindestens eine Queröffnung hat und an mindestens einer Dichtlippe einer Außenhülse zum Öffnen bzw. Schließen des zweiten Ventils geführt ist. Zum Aktivieren der Vorrichtung nach der Erfindung müssen dann beide Ventile geöffnet werden, und zwar dadurch, dass insbesondere beide Innenhülsen in Richtung Zentralröhrchenmitte verfahren werden, so dass die jeweilige Queröffnung die betreffende Dichtlippe überfährt und eine Durchströmung der Appliziereinrichtung mit dem Druckmittel und dem zu applizierenden Stoff von dem stromaufseitigen Bereich zur Verbindung mit dem Druckmittelausgabeanschluss bis zur Austragöffnung möglich ist. Der Versatz der Innenhülsen gegenüber dem Zentralröhrchen kann jeweils durch eine axiale Relativverschiebung zwischen der betreffenden Innenhülse und dem Zentralröhrchen oder durch ein Verdrehen der jeweiligen Innenhülse gegenüber dem Zentralröhrchen mittels eines Gewindes erfolgen.

Der Begriff Innenhülse ist im vorliegenden Zusammenhang in seinem weitesten Sinne zu verstehen und bezeichnet beispielsweise ein einseitig verschlossenes Rohrstück, das am Umfang mindestens einen die Queröffnung bildenden Durchbruch hat. Auch kann es sich bei der bzw. den Innenhülsen jeweils um ein kolbenartigen Zapfen handeln, der mit einem axialen Sackloch und einem radialen Querkanal versehen ist, der die mindestens eine Queröffnung bildet und in das axiale Sackloch mündet.

Auch das zweite Ventil der Appliziereinrichtung kann derartig ausgebildet sein, dass die Innenhülse von der Applizierspitze und die Außenhülse von dem Zentralröhrchen gebildet ist.

Um eine dem Druck des Druckmittels standhaltende Verbindung zwischen der Appliziereinrichtung und dem Druckmittelausgabeanschluss der Druckausgabeeinrichtung schaffen zu können, kann der Bereich der Appliziereinrichtung, der zur Verbindung mit dem Druckmittelausgabeanschluss ausgebildet ist, einen Innenkonus bilden, der mit einem korrespondierenden Außenkonus des Druckmittelanschlusses der Druckausgabeeinrichtung korrespondiert. Die Verbindung entspricht dann im Wesentlichen der so genannten Luer-Verbindung.

Des Weiteren kann zur unverlierbaren Verbindung zwischen der Appliziereinrichtung und der Druckausgabeeinrichtung, in welcher ein Druckmittel wie Druckluft vorgehalten wird, eine Sicherungseinrichtung für die Appliziereinrichtung an dem Druckmittelausgabeanschluss vorgesehen sein.

Die Vorrichtung nach der Erfindung kann auch zur Aufnahme eines Mehrkomponentensystems ausgelegt sein, wobei eine der Komponenten in dem Zentralröhrchen und mindestens eine weitere Komponente in der oder den Innenhülsen vorgehalten wird. Eine Vermischung der Komponenten erfolgt bei der Anwendung nach dem Teleskopieren von Innenhülse(n) und Zentraköhrchen. Auch kann eine Mischkammer für die Komponenten vorgesehen sein, die vorzugsweise in dem Zentralröhrchen ausgebildet ist. Ferner ist es auch denkbar, mehrere miteinander teleskopierbare Innenhülsen vorzusehen, in denen vor dem Teleskopieren jeweils eine Komponente des Mehrkomponentensystems vorgehalten wird.

Weitere Vorteile und vorteilhafte Ausgestaltungen des Gegenstandes der Erfindung sind in der Beschreibung, der Zeichnung und den Ansprüchen entnehmbar.

Vier Ausführungsbeispiele der Vorrichtung nach der Erfindung sind in der Zeichnung schematisch vereinfacht dargestellt und werden in der nachfolgenden Beschreibung näher erläutert. Es zeigt:
- Fig. 1: eine Vorrichtung zum Auftragen eines Mattierungsmittels auf einen Zahnstumpf;
- Fig. 2: eine Applikationsspitze der Vorrichtung;
- Fig. 3: eine alternative Ausführungsform einer Applizierspitze;
- Fig. 4: eine dritte Ausführungsform einer Applizierspitze zusammen mit einem Pulvervorrat,
- Fig. 5: eine Innenhülse der Applizierspitze nach Fig. 4;
- Fig. 6: eine Außenhülse der Applizierspitze nach Fig. 5, und
- Fig. 7: eine weitere Ausführungsform einer Appliziereinrichtung einer Vorrichtung nach der Erfindung.

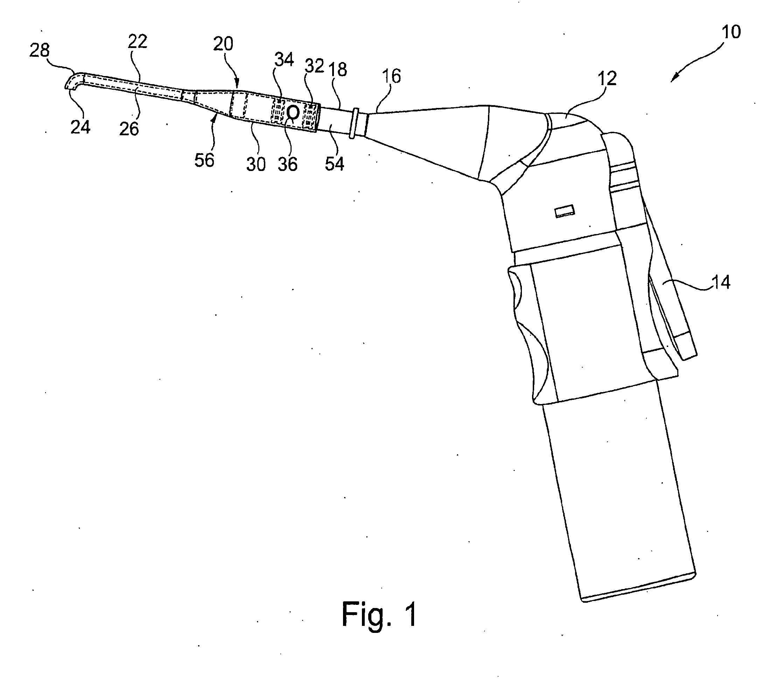

In Fig. 1 ist eine Vorrichtung 10 zum Auftragen eines pulverförmigen Mattierungsmittels eines nicht näher dargestellten Zahnstumpfes gezeigt, welcher mittels einer Kamera zur Anfertigung eines Keramikinlays aufgenommen werden soll.

Die Vorrichtung 10 umfasst eine Druckausgabeeinrichtung 12, in der ein unter Druck stehendes Medium, beispielsweise Luft, vorgehalten ist, welche durch Betätigung eines Betätigungshebels 14 über einen einen Druckmittelausgabeanschluss darstellenden Austragstutzen 16 aus der Druckausgabeeinrichtung 12 ausgetragen werden kann.

Auf den Austragstutzen 16 ist eine Innenhülse 18 einer Appliziereinrichtung 20 aufgesteckt, welche mit einem Zentralröhrchen 56 versehen ist, das eine Applizierspitze 22, die an ihrem der Druckausgabeeinrichtung 12 abgewandten Ende mit einer Austragöffnung 24 ausgebildet ist. Das Zentralröhrchen 56 bildet eine Außenhülse der Appliziereinrichtung 20. In diese Außenhülse 56 ist die Innenhülse 18, die auf den Austragstutzen 16 aufgesteckt ist, verschiebbar gelagert.

Die Applizierspitze 22 weist einen geraden Bereich 26 auf, der über einen gebogenen Abschnitt 28 zu der Austragöffnung 24 führt und an der der Austragöffnung 24 abgewandten Ende in einen Bereich 30 vergrößerten Durchmessers des Zentralröhrchens 56 übergeht, in welchem die Innenhülse 18 verschiebbar geführt ist.

Der Bereich 30 vergrößerten Durchmessers des Zentralröhrchens 56 weist an seiner Innenseite in axialer Richtung voneinander beabstandet zwei ringförmig ausgebildete Dichtlippen 32 und 34 auf, an denen die Innenhülse 18 geführt ist.

Die Innenhülse 18 ist röhrchenförmig ausgebildet und ist an ihrem der Druckvorrichtung abgewandten Ende verschlossen. Des Weiteren weist die Innenhülse 18 an ihrem Umfang Queröffnungen 36 auf, die in Deaktivierungsstellung der Appliziereinrichtung 20 zwischen den beiden Dichtlippen 32 und 34 liegen. Im Innenraum der Innenhülse 18 ist das Pulver vorgehalten, das das Mattierungsmittel darstellt.

Die Anwendung der in Fig. 1 dargestellten Vorrichtung erfolgt in nachfolgend beschriebener Weise.

Vor der Anwendung, d. h. vor Aufbringung des Mattierungsmittels werden die Druckvorrichtung 12 und eine mit dem Pulver befüllte Appliziereinrichtung 20 in getrennter Form aufbewahrt. Die Appliziereinrichtung 20 kann hierbei an dem offenen Ende der Innenhülse 18 mit einer Folie oder dergleichen versehen sein. Soll nun das Mattierungsmittel auf einen Zahn bzw. einen Zahnstumpf aufgebracht werden, wird die Appliziereinrichtung 20 unter Zerstörung der Folie auf den Austragstutzen 16 der Druckvorrichtung 12 aufgesetzt. Anschließend wird die Innenhülse 18 gegenüber dem Zentralröhrchen 56 verschoben, so dass die Queröffnungen 36 die Dichtlippe 34 überqueren. Damit ist der Strömungsweg zwischen dem Austragstutzen 16, der Innenhülse 18 und der Austragöffnung 24 der Applizierspitze 22 freigegeben. Nun kann durch Betätigung des Betätigungshebels 14 ein Druckstoß auf das in der Innenhülse 18 vorgehaltene Pulver ausgeübt werden, so dass dieses über die Queröffnungen in die Applizierspitze 22 und von dort über die Austragöffnung 24 auf den zu mattierenden Zahnstumpf transportiert wird.

Die Appliziereinrichtung 20 aus der Innenhülse 18 und dem Zentralröhrchen 56 stellt ein Einmalwerkzeug dar, das vor Behandlung eines neuen Patienten gewechselt wird.

Bei der Druckvorrichtung 12 muss es sich nicht um eine Druckluftdose der dargestellten Art handeln. Alternativ kann auch eine in einem Zahnarztbehandlungsraum ohnehin vorhandene Druckquelle mit der Appliziereinrichtung 20 verbunden werden.

Ferner kann die Druckvorrichtung 12 mit dem Betätigungshebel 14 mit einer Wechseldose versehen sein, in der die erforderliche Druckluft vorgehalten wird.

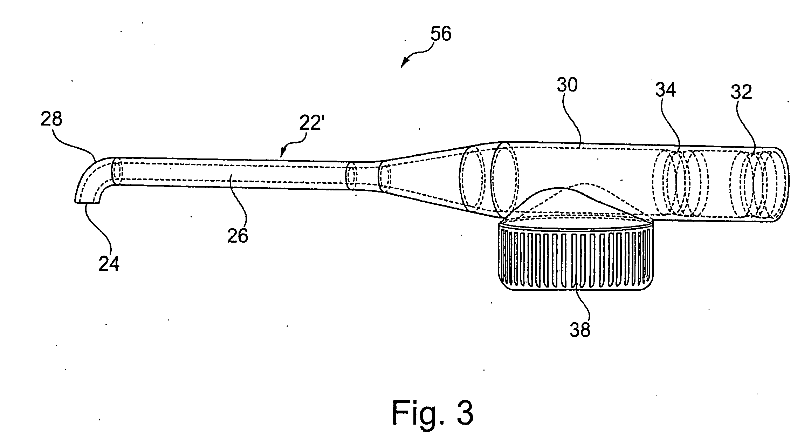

In Fig. 3 ist eine alternative Ausführungsform der erfindungsgemäß ausgebildeten Vorrichtung dargestellt, bei der das Zentralröhrchen 56 selbst mit einem Pulvervorratsbehälter 38 versehen ist und die mithin zur mehrmaligen Anwendung ausgelegt ist. Der Pulvervorratsbehälter 38 ist nach Art eines zylindrischen Aufsatzes ausgebildet, der bezogen auf die Achse der Appliziereinrichtung 20' bzw. des Zentralröhrchens 56 radial auf den Bereich 30 vergrößerten Durchmessers aufgesetzt ist. In diesem Falle wird in der hier nicht näher dargestellten Innenhülse 18, die der Innenhülse der Ausführungsform nach Fig. 1 entspricht, kein Pulver vorgehalten. Auch muss die Innenhülse 18 in diesem Fall an der der Austragöffnung 24 abgewandten Seite nicht mit einer Folie oder dergleichen versiegelt sein. Vielmehr ist das Pulver nach Einsetzen der Innenhülse in das Zentralröhrchen 56 in der Deaktivierungsstellung, d. h. wenn die Queröffnung 36 zwischen den beiden Dichtlippen 32 und 34 angeordnet ist, sicher in dem Pulvervorratsbehälter aufgenommen.

Zur Aktivierung wird wie bei der Ausführungsform nach Fig. 1 die Innenhülse in das Zentralröhrchen 56 eingedrückt. Durch den dann mittels der Druckvorrichtung ausgeübten Druckstoß wird das in dem Pulvervorratsbehälter 38 vorgehaltene Pulver aufgewirbelt und in Abhängigkeit von der Länge des Druckstoßes über die Austragöffnung 24 ausgetragen.

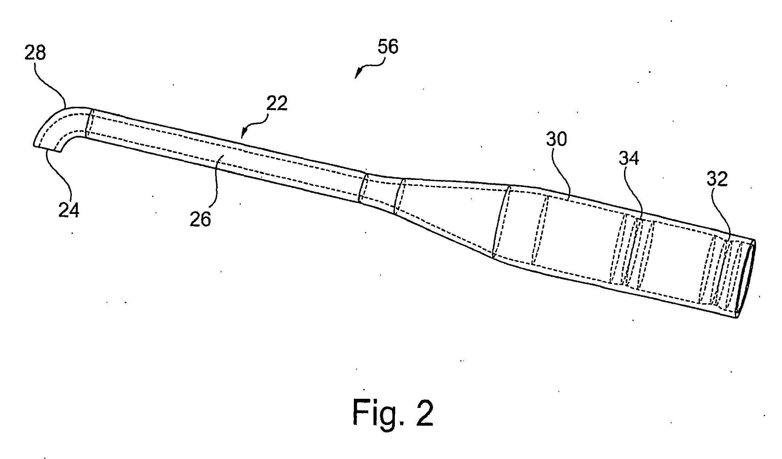

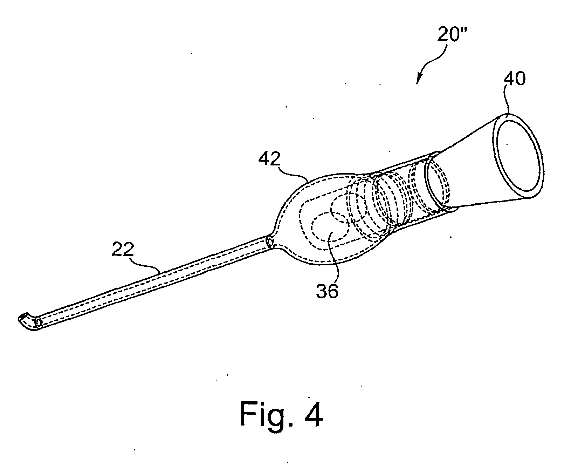

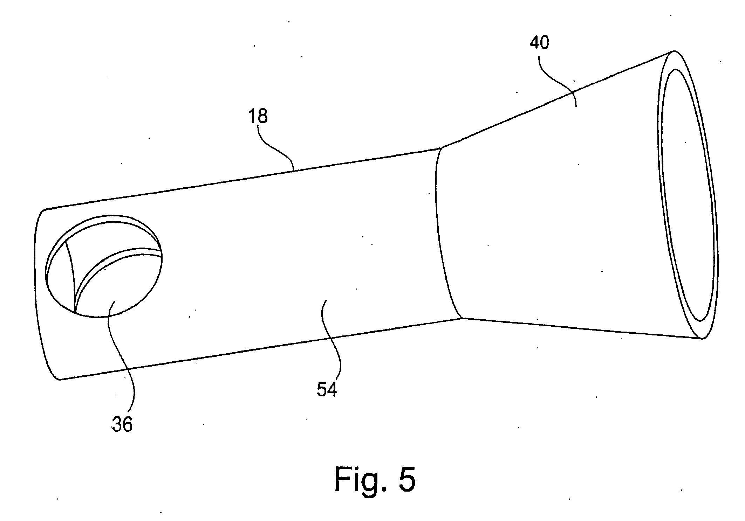

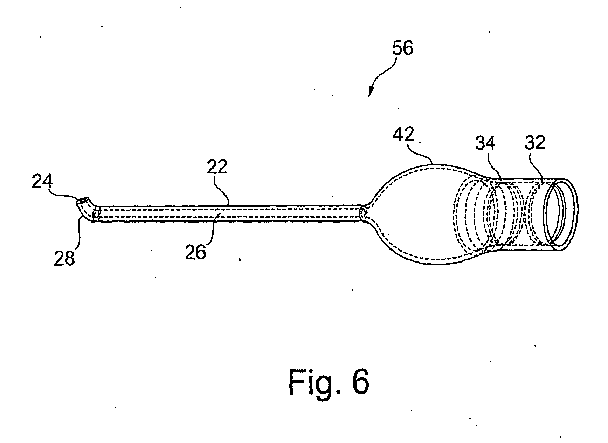

In den Figuren 4 bis 6 ist eine weitere Ausführungsform einer erfindungsgemäß ausgebildeten Vorrichtung dargestellt, die im Wesentlichen derjenigen nach den Figuren 1 und 2 entspricht, sich von dieser aber dadurch unterscheidet, dass die Innenhülse 18 einen trichterartigen, kegelstumpfförmigen Abschnitt 40 umfasst, der nach Art eines Luersystems auf einen Außenkonus einer im vorliegenden Fall nicht dargestellten Druckvorrichtung aufgesetzt werden kann. Das stromabseitige Ende des trichterförmigen Abschnitts 40 dient als Anschlag für das Zentralröhrchen 56 beim Aktivieren der Appliziereinrichtung. Des Weiteren liegen die Queröffnungen 36 der Innenhülse 18 in Aktivierungsstellung in einem bauchigen Abschnitt 42 des Zentralröhrchens 56, so dass zwischen der Innenhülse 18 und den die Außenhülse bildenden Zentralröhrchen 56 gegenüber der Ausführungsform nach den Figuren 1 und 2 ein vergrößerter Strömungsquerschnitt zur Verfügung steht.

Die Funktion und die Anwendung der in den Figuren 4 bis 6 dargestellten Appliziereinrichtung 20' entsprechen der Funktion und der Anwendung der Appliziereinrichtung nach den Figuren 1 und 2.

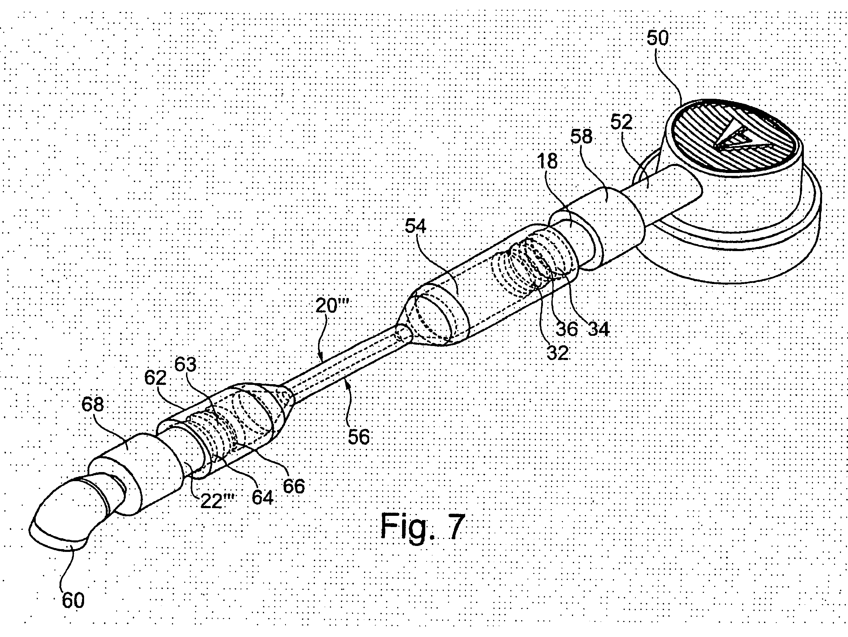

In Fig. 7 ist eine weitere Ausführungsform einer Appliziereinrichtung 20'" dargestellt, die mit einem Sprühkopf 50 einer mit Druckluft befüllten, hier nicht näher dargestellten Sprühdose verbunden ist. Zur Verbindung der Appliziereinrichtung 20'" ist der Sprühkopf 50 mit einem als Stutzen ausgebildeten Druckmittelausgabeanschluss 52 versehen, der im Wesentlichen zylindrisch ausgebildet ist. Die Appliziereinrichtung 20'" dient zum Applizieren einer Flüssigkeit, insbesondere eines flüssigen Mattierungsmittels zum auftragen auf einen nicht näher dargestellten Zahnstumpf, welcher mittels einer Kamera zur Anfertigung eines Keramikinlays aufgenommen werden soll. Das Mattierungsmittel ist hierbei in einem Aufnahmeraum 54 eines Zentralröhrchens 56 aufgenommen und zwar in einem Bereich vergrößerten Durchmessers.

Stromabseitig ist das Zentralröhrchen 56 von einem ersten Ventil begrenzt, das aus einer Innenhülse 18 gebildet ist, die stirnseitig verschlossen ist, auf den Druckmittelausgabeanschluss 52 des Sprühkopfes 50 aufgesteckt ist und an ihrem Umfang Queröffnungen 36 aufweist, welche mit an der Innenwand des Zentralröhrchens 56 ausgebildeten Dichtlippen 32 und 34 zusammenwirkt. Die Innenhülse 18 weist des Weiteren einen Ringbund 58 auf, der als Anschlag für die Außenhülse dient, welche von dem Zentralröhrchen 56 gebildet ist.

Am stromabseitigen Ende ist das Zentralröhrchen 56 über ein zweites Ventil mit einer Applizierspitze 22"' verbunden, welche mit einer Oraldüse 60 versehen ist, die die Austragöffnung bildet. Die Applizierspitze 22'" bildet entsprechend der Innenhülse 18 eine Innenhülse des zweiten Ventils, welche in einem zweiten Bereich vergrößerten Durchmessers 62 des Zentralröhrchens 56 verschiebbar geführt ist, die an ihrer Innenseite zwei ringförmige Dichtlippen 64 und 66 aufweist, die mit Queröffnungen der die Innenhülse bildenden Applizierspitze 22'" zusammenwirken.

Auch die Applizierspitze 22'" weist einen Ringbund 68 auf, der als Anschlag für den Bereich 62 vergrößerten Durchmessers des Zentralröhrchens 56 dient.

Zum Aktivieren der Appliziereinrichtung 20"' werden die beiden Innenhülsen 18 und 22"' jeweils bis zum Anschlag in das Zentralröhrchen 56 eingeschoben, so dass ein freier Strömungsweg von dem Bereich zur Verbindung mit dem Druckmittelausgabeanschluss bis zur Austragöffnung der Oraldüse 60 vorliegt. Bei Betätigung der Druckausgabeeinrichtung kann damit die in dem Vorratsraum 54 des Zentralröhrchens 56 vorgehaltene Flüssigkeit über die Oraldüse 60 ausgetragen und auf eine zu beaufschlagende Fläche aufgetragen werden.

## Patentansprüche

1. Vorrichtung zum Applizieren eines pulverförmigen oder flüssigen Stoffes, umfassend eine Druckausgabeeinrichtung (12) mit einem Druckmittelausgabeanschluss (16,52) und eine im Wesentlichen röhrchenartige Appliziereinrichtung (20) mit einem stromaufseitigen Bereich zur Verbindung mit dem Druckmittelausgabeanschluss (16,52) und einer stromabseitigen Austragöffnung (24) für den pulverförmigen oder flüssigen Stoff, wobei die Appliziereinrichtung (20) mit mindestens einem Vorratsraum (54) für den pulverförmigen oder flüssigen Stoff und mit mindestens einem Ventil versehen ist, nach dessen Öffnen eine Ausgabe des pulverförmigen oder flüssigen Stoffs mittels des Druckmittels über die Austragöffnung (24) ermöglicht ist, **dadurch gekennzeichnet, dass** das Ventil eine Innenhülse (18) umfasst, die eine verschlossene Stirnseite aufweist und deren der verschlossenen Stirnseite abgewandtes Ende einen Bereich der Appliziereinrichtung (20) bildet, der mit dem Druckmittelausgabeanschluss (16,52) verbindbar ist, und an der Umfangswand mindestens eine Queröffnung (36) hat, wobei die Innenhülse (18) an mindestens einer ringförmigen Dichtlippe (34,36) einer von einem Zentralröhrchen (56) gebildeten Außenhülse verschiebbar geführt ist, so dass in Abhängigkeit von der Stellung der Queröffnung (36) gegenüber der Dichtlippe (34) das Ventil entweder geöffnet oder geschlossen ist.

2. Vorrichtung nach Anspruch 1, **dadurch gekennzeichnet, dass** der Vorratsraum (54) stromauf des Ventils angeordnet ist und von der Innenhülse (18) gebildet ist.

3. Vorrichtung nach Anspruch 2, **dadurch gekennzeichnet, dass** die Innenhülse (18) des Ventils an dem dem Zentralröhrchen (56) abgewandten Ende mittels einer Folie verschlossen ist, welche beim Aufsetzen der Appliziereinrichtung (20) auf den Druckmittelausgabeanschluss (16) von diesem durchstoßen wird.

4. Vorrichtung nach Anspruch 1, **dadurch gekennzeichnet, dass** der Vorratsraum (54) stromab des Ventils angeordnet ist.

5. Vorrichtung nach Anspruch 4, **dadurch gekennzeichnet, dass** der Vorratsraum (54) von einem radial bezüglich der Achse der Appliziereinrichtung angeformten Behälter (38) gebildet ist.

6. Vorrichtung nach Anspruch 5, **dadurch gekennzeichnet, dass** der Vorratsraum (54) von einem Bereich vergrößerten Durchmessers des Zentralröhrchens (56) der Appliziereinrichtung (20) gebildet ist.

7. Vorrichtung nach einem der Ansprüche 4 bis 6, **dadurch gekennzeichnet, dass** das Zentralröhrchen (56) mittels eines zweiten Ventils von einer Applizierspitze (22"') getrennt ist, welche die Austragöffnung (24) aufweist.

8. Vorrichtung nach Anspruch 7, **dadurch gekennzeichnet, dass** das zweite Ventil eine Innenhülse umfasst, die stirnseitig geschlossen ist, an ihrer Umfangswand mindestens eine Queröffnung (63) hat und an mindestens einer Dichtlippe (64,66) einer Außenhülse (62) zum Öffnen bzw. Schließen des zweiten Ventils geführt ist.

9. Vorrichtung nach Anspruch 8, **dadurch gekennzeichnet, dass** die Innenhülse des zweiten Ventils von der Applizierspitze (22"') und die Außenhülse (62) von dem Zentralröhrchen (56) gebildet ist.

10. Vorrichtung nach einem der Ansprüche 1 bis 9, **dadurch gekennzeichnet, dass** der Bereich zur Verbindung mit dem Druckmittelanschluss einen Innenkonus bildet, der mit einem korrespondierenden Außenkonus des Druckmittelanschlusses der Druckausgabeeinrichtung korrespondiert.

11. Vorrichtung nach einem der Ansprüche 1 bis 10, **gekennzeichnet durch** eine Sicherungseinrichtung für die Appliziereinrichtung an dem Druckmittelausgabeanschluss.

12. Vorrichtung nach einem der Ansprüche 2 bis 11, **dadurch gekennzeichnet, dass** die mindestens eine Innenhülse (18) über ein Gewinde gegenüber dem Zentralröhrchen (56) in axialer Richtung verlagerbar ist.

## Claims

1. An apparatus for applying a powdery or liquid substance,
comprising a pressure discharge device (12) having a pressurant discharge connector (16, 52), and a substantially tube-type application device (20) having an upstream area for the connection to the pressurant discharge connector (16, 52) and a downstream outlet opening (24) for the powdery or liquid substance, wherein the application device (20) is provided with at least one storage chamber (54) for the powdery or liquid substance and with at least one valve, the outlet of the powdery or liquid substance by means of the pressurant via the outlet opening (24) being possible after said valve is opened,
**characterized in that**
the valve comprises an inner sleeve (18) which has a closed front side and whose end facing away from the closed front side forms an area of the application device (20) which area is connectable to the pressurant discharge connector (16, 52) and has on the circumferential wall at least one transverse opening (36), wherein the inner sleeve (18) is slidably guided on at least one annular sealing lip (34, 36) of an outer sleeve formed by a central tube (56) so that depending on the position of the transverse opening (36) relative to the sealing lip (34), the valve is either open or closed.

2. The apparatus according to claim 1,
**characterized in that**
the storage chamber (54) is arranged upstream of the valve and formed by the inner sleeve (18).

3. The apparatus according to claim 2,
**characterized in that**
on the end facing away from the central tube (56), the inner sleeve (18) of the valve is closed by means of a film which is penetrated by the pressurant discharge connector (16) when the application device (20) is put on the pressurant discharge connector.

4. The apparatus according to claim 1,
**characterized in that**
the storage chamber (54) is arranged downstream of the valve.

5. The apparatus according to claim 4,
**characterized in that**
the storage chamber (54) is formed by a container (38) which is formed radial relative to the axis of the application device.

6. The apparatus according to claim 5,
**characterized in that**
the storage chamber (54) is formed by an area of enlarged diameter of the central tube (56) of the application device (20).

7. The apparatus according to any of the claims 4 to 6,
**characterized in that**
the central tube (56) is separated by a second valve from an application tip (22"') comprising the outlet opening (24).

8. The apparatus according to claim 7,
**characterized in that**
the second valve comprises an inner sleeve which is closed on its front side, has at least one transverse opening (62) on its circumferential wall and is guided on at least one sealing lip (64, 66) of an outer sleeve (62) for opening and closing the second valve.

9. The apparatus according to claim 8,
**characterized in that**
the inner sleeve of the second valve is formed by the application tip (22"') and the outer sleeve (62) is formed by the central tube (56).

10. The apparatus according to any of the claims 1 to 9,
**characterized in that**
the area for the connection to the pressurant connector forms an inner cone which corresponds to a corresponding outer cone of the pressurant connector of the pressure discharge device.

11. The apparatus according to any of the claims 1 to 10,
**characterized by**
a securing device for the application device on the pressurant discharge connector.

12. The apparatus according to any of the claims 2 to 11,
**characterized in that**
the at least one inner sleeve (18) can be moved in the axial direction relative to the central tube (56) by means of a thread.

## Revendications

1. Dispositif pour appliquer une substance pulvérulente ou liquide, comprenant un dispositif de sortie de pression (12) ayant un connecteur de sortie d'agent de pression (16, 52), et un dispositif d'application (20) essentiellement en type de tube ayant en amont une partie pour la connexion au connecteur de sortie d'agent de pression (16, 52) et en aval une ouverture de sortie (24) pour la substance pulvérulente ou liquide, dans lequel le dispositif d'application (20) est pourvu d'au moins une chambre de stockage (54) pour la substance pulvérulente ou liquide et d'au moins une soupape, une sortie de la substance pulvérulente ou liquide par l'ouverture de sortie (24) étant possible après que ladite soupape a été ouverte,
**caractérisé en ce que**
la soupape comprend un manchon intérieur (18) qui a une face avant fermée et dont l'extrémité détournée de la face avant fermée forme une partie du dispositif d'application (20), ladite partie étant connectable au connecteur de sortie d'agent de pression (16, 52) et ayant au moins une ouverture transversale (36) au mur circonférentiel, dans lequel le manchon intérieur (18) est guidé coulissant à au moins une lèvre d'étanchéité annulaire (34, 36) d'un manchon extérieur formé par un tube central (56) de façon à ce que la soupape soit ou ouverte ou fermée en fonction de la position de l'ouverture transversale (36) par rapport à la lèvre d'étanchéité (34).

2. Dispositif selon la revendication 1,
**caractérisé en ce que**
la chambre de stockage (54) est arrangée en amont de la soupape et est formée par le manchon intérieur (18).

3. Dispositif selon la revendication 2,
**caractérisé en ce que**
le manchon intérieur (18) de la soupape est fermé à l'extrémité détournée du tube central (56) par un film qui est pénétré par le dispositif de sortie d'agent de pression (16) quand le dispositif d'application (20) est mis sur ledit dispositif de sortie d'agent de pression.

4. Dispositif selon la revendication 1,
**caractérisé en ce que**
la chambre de stockage (54) est arrangée en aval de la soupape.

5. Dispositif selon la revendication 4,
**caractérisé en ce que**
la chambre de stockage (54) est formée par un réservoir (38) radialement formé par rapport à l'axe du dispositif d'application.

6. Dispositif selon la revendication 5,
**caractérisé en ce que**
la chambre de stockage (54) est formée par une partie d'un diamètre élargi du tube central (56) du dispositif d'application (20).

7. Dispositif selon l'une quelconque des revendications 4 à 6,
**caractérisé en ce que**
le tube central (56) est séparé par une deuxième soupape d'une pointe d'application (2"') qui comporte l'ouverture de sortie (24).

8. Dispositif selon la revendication 7,
**caractérisé en ce que**
la deuxième soupape comprend un manchon intérieur qui est fermé à la face avant, qui a au moins une ouverture transversale (63) à son mur circonférentiel et qui est guidé à au moins une lèvre d'étanchéité (64, 66) d'un manchon extérieur (62) pour ouvrir et fermer la deuxième soupape.

9. Dispositif selon la revendication 8,
**caractérisé en ce que**
le manchon intérieur de la deuxième soupape est formé par la pointe d'application (22"') et le manchon extérieur (62) est formé par le tube central (56).

10. Dispositif selon l'une quelconque des revendications 1 à 9,
**caractérisé en ce que**
la partie pour la connexion au connecteur d'agent de pression forme un cône intérieur qui correspond à un cône extérieur correspondant du connecteur d'agent de pression du dispositif de sortie de pression.

11. Dispositif selon l'une quelconque des revendications 1 à 10,
**caractérisé par**
un dispositif de sécurisation pour le dispositif d'application au connecteur de sortie d'agent de pression.

12. Dispositif selon l'une quelconque des revendications 2 à 11,
**caractérisé en ce que**
l'au moins un manchon intérieur (18) est mobile par rapport au tube central (56) en direction axiale par un filet.
